# FASCICULE DE BREVET EUROPEEN

(11) **EP 1 060 944 B1**
(45) Date de publication et mention de la délivrance du brevet: **11.04.2007**
(21) Numéro de dépôt: 00401714.1
(22) Date de dépôt: 16.06.2000
(51) Int. Cl.: B60N 2/60, B60N 2/30, B60N 2/06

(54) **Ensemble de sièges pour un plancher de véhicule automobile**
Sitzgruppe für einen Kraftfahrzeugboden
Seating unit for the floor of a motor vehicle

(30) Priorité: 17.06.1999 FR 9907680
(43) Date de publication de la demande: 20.12.2000
(73) Titulaire: Renault s.a.s., 92100 Boulogne Billancourt (FR)
(72) Inventeur: Allera, Rodolphe, 91770 Saint Vrain (FR)

(56) Documents cités:
- EP-A- 0 331 241
- WO-A-99/03377
- DE-C- 19 652 050
- FR-A- 2 735 081
- US-A- 5 516 194
- US-A- 5 673 973
- US-A- 5 868 452

## Description

La présente invention est relative à un ensemble de sièges destiné à être monté sur un plancher de véhicule automobile.

On connaît du document EP 0 331 241 qui comprend les caractéristiques du préambule de la revendication 1, un ensemble de sièges destiné à être monté sur un plancher de véhicule automobile, comprenant deux sièges comportant chacun un cadre d'assise et un cadre de dossier, lesdits cadres d'assise étant montés mobiles sur un chariot entre une position où ils sont sensiblement accolés l'un à l'autre et une position où ils sont écartés l'un de l'autre, ledit chariot étant lui-même destiné à être monté mobile sur ledit plancher entre une position reculée et une position avancée.

Un tel ensemble de sièges permet d'ajouter un élément de siège supplémentaire entre les deux sièges lorsqu'ils sont écartés l'un de l'autre, offrant ainsi une place pour un troisième passager occasionnel.

Le mécanisme permettant à la fois de déplacer les deux sièges dans les directions transversales et longitudinales du véhicule, tel qu'il est enseigné par le document susmentionné, est assez compliqué et encombrant.

La présente invention a pour but principal de résoudre ces inconvénients.

On atteint ce but de l'invention avec un ensemble de sièges selon la revendication 1.

Suivant d'autres caractéristiques de l'ensemble de sièges selon l'invention:
- ledit chariot est monté coulissant sur des moyens de guidage eux-mêmes destinés à être montés rotatifs autour d'un axe transversal,
- lesdits moyens de guidage comprennent un rail destiné à être positionné suivant un axe longitudinal médian dudit plancher,
- cet ensemble de sièges comprend des moyens pour démonter rapidement lesdits moyens de guidage,
- cet ensemble de sièges comprend des moyens pour empêcher lesdits moyens de guidage de pivoter lorsque ledit chariot n'est pas en position reculée,
- cet ensemble de sièges comprend des moyens de verrouillage des déplacements latéraux desdits cadres d'assise selon des positions prédéfinies,
- ladite poutre longitudinale et les poutres transversales sont des profilés de section sensiblement triangulaire ou trapézoïdale assemblés entre eux par exemple par soudage,
- lesdits profilés et lesdits cadres d'assise sont en un alliage d'aluminium ou de magnésium, ou en un matériau synthétique,
- chacun desdits cadres d'assise comprend des moyens d'arrimage intérieur et extérieur séparés par une distance normalisée pour recevoir un siège d'enfant,
- lorsque lesdits cadres d'assise sont en position écartée l'un de l'autre, lesdits moyens d'arrimage intérieurs sont sensiblement séparés par ladite distance normalisée pour recevoir un siège d'enfant entre lesdits sièges,
- cet ensemble de sièges comprend des ceintures embarquées sur lesdits sièges.

Grâce à ces caractéristiques, on peut réaliser de manière très simple les différentes liaisons glissantes qui interviennent, et on gagne de la place en utilisant directement les cadres d'assise comme moyens de glissières. On obtient en outre un dispositif de fixation du siège sur le plancher du véhicule qui est très sûr.

La présente invention couvre également un véhicule automobile, remarquable en ce qu'il est équipé d'un ensemble de sièges tel que défini ci-dessus.

D'autres caractéristiques et avantages de la présente invention apparaîtront à la lecture de la description qui va suivre et à l'examen des figures du dessin annexé, dans lequel:
- la figure 1 est une vue en perspective éclatée d'un premier mode de réalisation de l'ensemble de sièges selon l'invention, les deux sièges qui le composent ayant été déshabillés,
- la figure 2 est une vue en perspective d'une réalisation d'un ensemble de sièges qui ne fait pas parti de l'invention, lorsque les deux sièges qui le composent sont en position avancée et qu'ils sont écartés l'un de l'autre,
- la figure 3 est une vue en perspective de l'ensemble de sièges de la figure 1 lorsque lesdits sièges sont en position reculée et qu'ils sont accolés l'un à l'autre,
- la figure 4 est une vue en perspective analogue à celle de la figure 3, lesdits sièges étant en position avancée, et
- la figure 5 est une vue en perspective analogue à celle de la figure 4, lesdits sièges étant écartés l'un de l'autre.

Sur ces figures, des références identiques ou analogues désignent des organes ou ensembles d'organes identiques ou analogues.

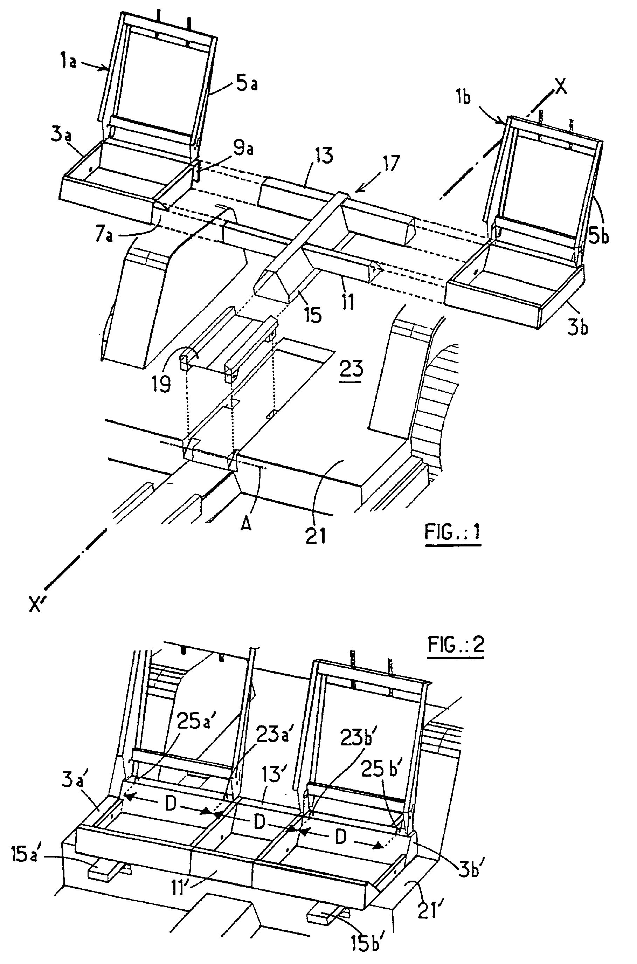

Dans ce qui suit, on parlera de directions longitudinale et transversale. Ces adjectifs doivent s'entendre par rapport à la direction de marche du véhicule automobile, matérialisée par l'axe XX' sur la figure 1.

On se reporte à présent à cette figure, sur laquelle on peut voir l'ensemble de sièges selon l'invention lorsqu'il est exécuté selon un premier mode de réalisation.

Cet ensemble de sièges comprend des premier et deuxième sièges dont on n'a représenté que les structures 1a, 1b, la mousse et le tissus revêtant celles-ci ayant été ôtées pour la clarté de l'exposé.

Chaque structure de siège comprend un cadre d'assise 3a, 3b et un cadre de dossier 5a, 5b réalisés en métal tel qu'un alliage d'aluminium ou de magnésium ou en un matériau synthétique, par exemple.

Chacun des cadres d'assise 3a, 3b comprend deux cavités 7a, 9a définissant des volumes correspondant à ceux définis par deux poutres transversales 11, 13 reliées entre elles par une poutre longitudinale 15, l'ensemble de ces poutres formant un chariot 17.

De la sorte, chaque cadre d'assise peut coulisser selon une direction transversale sur les deux poutres 11, 13, entre une position où ils sont sensiblement accolés l'un à l'autre et une position où ils sont écartés l'un de l'autre.

Les poutres 11, 13, 15 sont de préférence formées par des profilés en métal tel qu'un alliage d'aluminium ou de magnésium ou en un matériau synthétique, de section par exemple triangulaire ou trapézoïdale, assemblés entre eux par soudage.

La poutre longitudinale 15 est elle-même montée coulissante sur un rail 19 entre une position avancée et une position reculée, ce rail étant lui-même destiné à être fixé suivant un axe longitudinal médian du plancher 21 d'un coffre 23 de véhicule automobile.

Selon une variante représentée sur la figure 1, le rail 19 peut être monté rotatif autour d'un axe transversal A sur le plancher 21.

En option, le rail 19 peut être muni de moyens de démontage rapide (non représentés) permettant de rendre l'ensemble de sièges amovible.

L'ensemble de sièges selon l'invention comprend également des moyens traditionnels (non représentés) pour bloquer les cadres d'assise 3a, 3b dans une position donnée sur les poutres transversales 11, 13, et éventuellement pour verrouiller leurs déplacements latéraux selon des positions prédéfinies.

Lorsque le rail 19 est monté rotatif sur le plancher 21, l'ensemble de sièges selon l'invention peut également comprendre des moyens traditionnels (non représentés) pour bloquer ce rail en position horizontale, et éventuellement pour interdire son pivotement tant que le chariot 17 n'est pas en position reculée.

L'ensemble de sièges selon l'invention peut également comprendre des ceintures de sécurité embarquées (non représentées), c'est-à-dire des ceintures fixées directement sur les structures 1a, 1b des sièges.

On se reporte à présent à la figure 2, sur laquelle on a représenté une réalisation de l'ensemble de sièges qui ne fait pas parti de l'invention.

Comme on peut le voir sur cette figure, cet ensemble de sièges diffère de celui de l'invention en ceci que les deux poutres transversales 11', 13' sont reliées entre elles par deux poutres longitudinales 15a', 15b' destinées à être positionnées suivant des axes longitudinaux latéraux du plancher 21'.

De manière analogue à ce qui précède, chacune des deux poutres longitudinales 15a', 15b' est montée coulissante sur le plancher 21', et éventuellement rotative sur ce plancher.

On a également représenté sur la figure 2 des moyens d'arrimage intérieurs 23a', 23b' et extérieurs 25a', 25b' sur chaque cadre d'assise 3a', 3b', ces moyens ayant sensiblement la forme d'anneaux séparés par une distance normalisée D pour recevoir un siège d'enfant (non représenté).

Les cotes de l'ensemble de sièges sont calculées de manière que lorsque les cadres d'assise 3a', 3b' sont en position écartée l'un de l'autre (position représentée sur la figure 2), les moyens d'arrimage intérieurs 23a', 23b' sont séparés par la distance normalisée D.

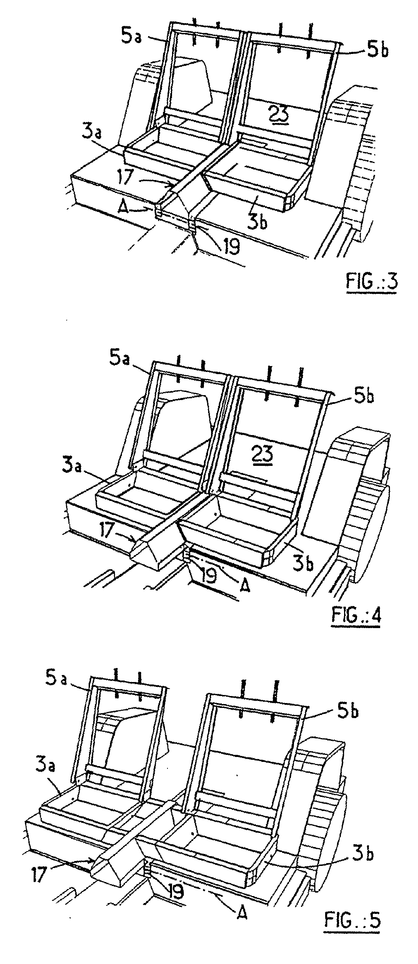

Pour comprendre le fonctionnement et les avantages de l'invention, on se reporte à présent aux figures 3 à 5, sur lesquelles on a représenté l'ensemble de sièges de la figure 1 dans ses principales positions d'utilisation.

Lorsqu'au plus deux passagers doivent prendre place sur l'ensemble de sièges et qu'un faible volume dans le coffre 23 est suffisant, on bloque les cadres d'assise 3a, 3b dans la position où ils sont sensiblement accolés l'un à l'autre, et on bloque le chariot 17 dans sa position reculée (figure 3).

Lorsqu'au plus deux passagers doivent prendre place sur l'ensemble de sièges et qu'un volume plus important dans le coffre 23 est nécessaire, on bloque les cadres d'assise 3a, 3b dans la position où ils sont sensiblement accolés l'un à l'autre, et on bloque le chariot 17 dans sa position avancée (figure 4).

Lorsque trois passagers doivent prendre place sur l'ensemble de sièges selon l'invention, on bloque les cadres d'assise 3a, 3b dans la position où ils sont écartés l'un de l'autre, on bloque le chariot 17 dans sa position avancée (figure 5) et, selon les besoins, on intercale entre les deux sièges:
- un élément de siège supplémentaire (non représenté) permettant à un adulte de s'asseoir, ou
- un siège d'enfant (non représenté), à condition que les cadres d'assise 3a, 3b soient équipés des moyens d'arrimage susmentionnés.

Lorsqu'aucun passager ne doit prendre place sur l'ensemble de sièges selon l'invention et qu'un volume optimal de coffre est recherché, on rabat les cadres de dossier 5a, 5b sur les cadres d'assise 3a, 3b, on débloque le rail 19, et on fait pivoter les deux sièges vers l'avant autour de l'axe A.

Comme on peut le comprendre à présent, l'ensemble de sièges selon l'invention comprend des moyens permettant de réaliser de manière très simple les différentes liaisons glissantes (et pivotante) qui interviennent.

Cet ensemble de sièges permet en outre de gagner de la place en utilisant directement les cadres d'assise comme moyens de glissières.

Cet ensemble de sièges est particulièrement adapté à une structure en aluminium, permettant de gagner du poids tout en assurant un niveau de sécurité optimal.

## Revendications

1. Ensemble de sièges destiné à être monté sur un plancher (21; 21') de véhicule automobile, comprenant deux sièges comportant chacun un cadre d'assise (3a, 3b; 3a', 3b') et un cadre de dossier (5a, 5b), lesdits cadres d'assise (3a, 3b; 3a', 3b') étant montés mobiles sur un chariot (17) entre une position où ils sont sensiblement accolés l'un à l'autre et une position où ils sont écartés l'un de l'autre, ledit chariot (17) étant lui-même destiné à être monté mobile sur ledit plancher (21; 21') entre une position reculée et une position avancée, ledit chariot (17) comprenant une poutre longitudinale (15; 15a', 15b') destinée à être montée coulissante sur ledit plancher (21; 21') et supportant deux poutres transversales (11, 13; 11', 13'), et chacun desdits cadrés d'assise (3a, 3b; 3a', 3b') étant conformé de manière à coulisser sur lesdites poutres transversales (11, 13; 11', 13'), **caractérisé en ce que** ledit chariot (17) comprend une seule poutre longitudinale (15) destinée à être positionnée suivant un axe longitudinal médian dudit plancher (21).

2. Ensemble de sièges selon la revendication 1, **caractérisé en ce que** ledit chariot (17) est monté coulissant sur des moyens de guidage (19) eux-mêmes destinés à être montés rotatifs autour d'un axe transversal (A).

3. Ensemble de sièges selon la revendication 2 lorsqu'elle dépend de la revendication 1 **caractérisé en ce que** lesdits moyens de guidage comprennent un rail (19) destiné à être positionné suivant un axe longitudinal médian dudit plancher (21).

4. Ensemble de sièges selon la revendication 3, lorsqu'elle dépend de la revendication 2 **caractérisé en ce que** lesdits moyens de guidage comprennent deux rails destinés à être positionnés suivant des axes longitudinaux dudit plancher (21').

5. Ensemble de sièges selon l'une quelconque des revendications 2 à 4, **caractérisé en ce qu'**il comprend des moyens pour démonter rapidement lesdits moyens de guidage (19).

6. Ensemble de sièges selon l'une quelconque des revendications 2 à 5, **caractérisé en ce qu'**il comprend des moyens pour empêcher lesdits moyens de guidage (19) de pivoter lorsque ledit chariot (17) n'est pas en position reculée.

7. Ensemble de sièges selon l'une quelconque des revendications précédentes, **caractérisé en ce qu'**il comprend des moyens de verrouillage des déplacements latéraux desdits cadres d'assise (3a, 3b) selon des positions prédéfinies.

8. Ensemble de sièges selon l'une quelconque des revendications précédentes, **caractérisé en ce que** lesdites poutres longitudinale(s) (15) et transversales (11, 13) sont des profilés de section sensiblement triangulaire ou trapézoïdale assemblés entre eux par exemple par soudage.

9. Ensemble de sièges selon la revendication 8 **caractérisé en ce que** lesdits profilés (11, 13; 15;) et lesdits cadres d'assise (3a, 3b), sont en un alliage d'aluminium ou de magnésium, ou en un matériau synthétique.

10. Ensemble de sièges selon l'une quelconque des revendications précédentes, **caractérisé en ce que** chacun desdits cadres d'assise (3a', 3b') comprend des moyens d'arrimage intérieur (23a', 23b') et extérieur (25a', 25b') séparés par une distance normalisée (D) pour recevoir un siège d'enfant.

11. Ensemble de sièges selon la revendication 10 **caractérisé en ce que** lorsque lesdits cadres d'assise (3a', 3b') sont en position écartée l'un de l'autre, lesdits moyens d'arrimage intérieurs (23a', 23b') sont sensiblement séparés par ladite distance normalisée (D) pour recevoir un siège d'enfant entre lesdits sièges.

12. Ensemble de sièges selon l'une quelconque des revendications précédentes, **caractérisé en ce qu'**il comprend des ceintures embarquées sur lesdits sièges.

13. Véhicule automobile, **caractérisé en ce qu'**il est équipé d'un ensemble de sièges conforme à l'une quelconque des revendications précédentes.

## Claims

1. Seating unit designed to be mounted on the floor (21; 21') of a motor vehicle, comprising two seats each one including a seat cushion frame (3a, 3b; 3a', 3b') and a backrest frame (5a, 5b), the said seat cushion frames (3a, 3b; 3a', 3b') being mounted such that they can move on a carrier (17) between a position where they are substantially close to each other and a position where they are moved away from each other, the said carrier (17) being itself designed to be mounted such that it can move on the said floor (21; 21') between a rearward position and a forward position, the said carrier (17) comprising a longitudinal beam (15; 15a', 15b') designed to be mounted such that it can slide on the said floor (21; 21') and supporting two crossbeams (11, 13; 11', 13'), and each of the said seat cushion frames (3a, 3b; 3a', 3b') being constructed so that it can slide on the said crossbeams (11, 13; 11', 13'), **characterized in that** the said carrier (17) comprises a single longitudinal beam (15) designed to be positioned along a longitudinal median axis of the said floor (21).

2. Seating unit according to Claim 1, **characterized in that** the said carrier (17) is mounted such that it can slide on guiding means (19) themselves designed to be mounted such that they can rotate about a transverse axis (A).

3. Seating unit according to Claim 2 when it depends on Claim 1, **characterized in that** the said guiding means comprise a rail (19) designed to be positioned along a longitudinal median axis of the said floor (21).

4. Seating unit according to Claim 3 when it depends on Claim 2, **characterized in that** the said guiding means comprise two rails designed to be positioned along longitudinal axes of the said floor (21').

5. Seating unit according to any one of Claims 2 to 4, **characterized in that** it comprises means for rapidly removing the said guiding means (19).

6. Seating unit according to any one of Claims 2 to 5, **characterized in that** it comprises means for preventing the said guiding means (19) from pivoting when the said carrier (17) is not in the rearward position.

7. Seating unit according to any one of the preceding claims, **characterized in that** it comprises locking means for preventing lateral displacements of the said seat cushion frames (3a, 3b) from preset positions.

8. Seating unit according to any one of the preceding claims, **characterized in that** the said longitudinal beam(s) (15) and crossbeams (11, 13) are metal sections with a substantially triangular or trapezoidal cross section assembled together for example by welding.

9. Seating unit according to Claim 8, **characterized in that** the said metal sections (11, 13, 15) and the said seat cushion frames (3a, 3b) are made of aluminium or magnesium alloy, or made of a synthetic material.

10. Seating unit according to any one of the preceding claims, **characterized in that** each of the said seat cushion frames (3a', 3b') comprises inner anchorage means (23a', 23b') and outer anchorage means (25a', 25b') separated by a standard distance (D) in order to accommodate a child seat.

11. Seating unit according to Claim 10, **characterized in that** when the said seat cushion frames (3a', 3b') are in the position moved away from each other, the said inner anchorage means (23a', 23b') are generally separated by the said standard distance (D) in order to accommodate a child seat between the said seats.

12. Seating unit according to any one of the preceding claims, **characterized in that** it comprises safety belts built into the said seats.

13. Motor vehicle, **characterized in that** it is fitted with a seating unit according to any one of the preceding claims.

## Patentansprüche

1. Sitzgruppe, die zur Montage auf einem Boden (21; 21') eines Kraftfahrzeugs bestimmt ist, umfassend zwei Sitze, die jeweils einen Sitzrahmen (3a, 3b; 3a'; 3b') und einen Rückenrahmen (5a, 5b) umfassen, wobei die Sitzrahmen (3a, 3b; 3a', 3b') auf einem Schlitten (17) montiert sind, so dass sie zwischen einer Position, in der sie im Wesentlichen aneinander angrenzen, und einer Position, in der sie voneinander beabstandet sind, beweglich sind, wobei der Schlitten (17) selbst dazu bestimmt ist, auf dem Boden (21; 21') zwischen einer zurückgeschobenen und einer vorgeschobenen Position beweglich montiert zu werden, wobei der Schlitten (17) einen Längsträger (15; 15a'; 15b') umfasst, der dazu bestimmt ist, auf dem Boden (21; 21') gleitend montiert zu werden und zwei Querträger (11, 13; 11', 13') trägt, und wobei jeder der Sitzrahmen (3a, 3b; 3a', 3b') gleitend auf den Querträgern (11, 13; 11', 13') angeordnet ist, **dadurch gekennzeichnet, dass** der Schlitten (17) einen einzigen Längsträger (15) umfasst, der dazu bestimmt ist, entlang einer Mittellängsachse des Bodens (21) positioniert zu werden.

2. Sitzgruppe nach Anspruch 1, **dadurch gekennzeichnet, dass** der Schlitten (17) gleitend auf Führungsmitteln (19) montiert ist, die ihrerseits dazu bestimmt sind, um eine Querachse (A) drehbar montiert zu werden.

3. Sitzgruppe nach Anspruch 2, soweit von Anspruch 1 abhängig, **dadurch gekennzeichnet, dass** die Führungsmittel eine Schiene (19) umfassen, die dazu bestimmt ist, entlang einer Mittellängsachse des Bodens (21) positioniert zu werden.

4. Sitzgruppe nach Anspruch 3, soweit von Anspruch 2 abhängig, **dadurch gekennzeichnet, dass** die Führungsmittel zwei Schienen umfassen, die dazu bestimmt sind, entlang von Längsachsen des Bodens (21') positioniert zu werden.

5. Sitzgruppe nach einem der Ansprüche 2 bis 4, **dadurch gekennzeichnet, dass** sie Mittel zum schnellen Demontieren der Führungsmittel (19) umfasst.

6. Sitzgruppe nach einem der Ansprüche 2 bis 5, **dadurch gekennzeichnet, dass** sie Mittel umfasst, die das Schwenken der Führungsmittel (19) verhindern, wenn sich der Schlitten (17) nicht in der zurückgeschobenen Position befindet.

7. Sitzgruppe nach einem der vorhergehenden Ansprüche, **dadurch gekennzeichnet, dass** sie Mittel umfasst, die die seitliche Verschiebung der Sitzrahmen (3a, 3b) gemäß den vorbestimmten Positionen verriegeln.

8. Sitzgruppe nach einem der vorhergehenden Ansprüche, **dadurch gekennzeichnet, dass** der (die) Längsträger (15) und die Querträger (11, 13) Profile mit im Wesentlichen dreieckigem oder trapezförmigem Querschnitt sind, die untereinander beispielsweise durch Löten verbunden sind.

9. Sitzgruppe nach Anspruch 8, **dadurch gekennzeichnet, dass** die Profile (11, 13, 15) und die Sitzrahmen (3a, 3b) aus einer Aluminiumlegierung oder Magnesiumlegierung oder einem synthetischen Material bestehen.

10. Sitzgruppe nach einem der vorhergehenden Ansprüche, **dadurch gekennzeichnet, dass** jeder der Sitzrahmen (3a', 3b') innere (23a', 23b') und äußere (25a', 25b') Kopplungsmittel umfasst, die durch einen genormten Abstand (D) getrennt sind, um einen Kindersitz aufzunehmen.

11. Sitzgruppe nach Anspruch 10, **dadurch gekennzeichnet, dass** die inneren Kopplungsmittel (23a', 23b'), wenn sich die Sitzrahmen (3a', 3b') in der voneinander beabstandeten Position befinden, im Wesentlichen durch den genormten Abstand (D) voneinander getrennt sind, um zwischen den Sitzen einen Kindersitz aufzunehmen.

12. Sitzgruppe nach einem der vorhergehenden Ansprüche, **dadurch gekennzeichnet, dass** sie in den Sitzen eingebettete Gurte umfasst.

13. Kraftfahrzeug, **dadurch gekennzeichnet, dass** es mit einer nach einem der vorhergehenden Ansprüche ausgeführten Sitzgruppe ausgestattet ist.
